# EUROPEAN PATENT SPECIFICATION

(11) **EP 2 897 740 B1**
(45) Date of publication and mention of the grant of the patent: **15.06.2016**
(21) Application number: 14712659.3
(22) Date of filing: 25.03.2014
(51) Int. Cl.: B05B 15/12, B05B 13/02, B05B 13/04

(54) **COATING BOOTH FOR ELEMENTS TO BE COATED OF CONSIDERABLE LENGTH**
BESCHICHTUNGSKABINE ZU BESCHICHTENDE LÄNGLICHE TEILE
CABINE DE REVÊTEMENT POUR ÉLÉMENTS À REVÊTIR DE GRANDE LONGUEUR

(30) Priority: 29.03.2013 IT MI20130490
(43) Date of publication of application: 29.07.2015
(73) Proprietor: Cube Trevisan S.r.l., 45100 Verona (IT)
(72) Inventor: TREVISAN, Silvio Maria, I-37121 Verona (IT)
(74) Representative: Rapisardi, Mariacristina
(86) International application number: PCT/EP2014/055931
(87) International publication number: WO 2014/154672

(56) References cited:
- EP-A1- 0 021 209
- EP-A1- 0 164 899
- EP-B1- 1 038 591
- DE-C1- 19 722 773
- DE-U1-202010 002 572
- FR-A5- 2 131 180

## Description

The present invention concerns a coating booth for synthetic resin-based powder coating systems for elements to be coated of considerable length - preponderant over the other two dimensions - such as bars and extruded section bars of aluminium alloy or structural sections made of ferrous material, hanging in a vertical position from an overhead conveyor line.

Document EP 1038591 B1 represents the most relevant state of the art for the patent in suit and it discloses the preamble of independent claim 1.

As is known, in the present state of the art, powder coating booths constitute a specific station in continuous coating systems, in which an overhead conveyor line, to which the elements to be coated are hooked, translates them through the various stations of the system, in which the following are carried out in succession:
hooking the elements to be coated to the conveyor line with said elements generally in a vertical position,
pre-treatment of the surfaces of the elements to be coated, including acid degreasing and deoxidation, and washing;
drying the elements to be coated,
the actual coating process in coating booths with spraying by means of special electrostatic spray guns for spraying the synthetic resin-based coating powders, which, owing to the electrostatic effect, adhere to the surfaces of the elements to be coated,
final polymerisation of the resins through the controlled contribution of heat normally by means of hot air in an oven through which the elements to be coated pass,
cooling and unhooking from the conveyor line and unloading of the coated elements.

At present, coating booths are usually in the shape of a parallelepiped tunnel closed at the sides, the bottom and roof.

The overhead conveyor line passes through the two open surfaces at the tunnel entrance and the exit, it normally moves with rectilinear motion and the elements to be coated are hooked thereto generally in a vertical position, at a mutual distance from each other substantially based on the speed of the conveyor line, the typology of the element, the geometry thereof, the type, quality and characteristics of the coating powders, and the objectives in terms of the yield of the system.

As is known, the elements to be coated can be hung from the conveyor line by means of systems with rigid or swivel hooks, the swivel hooks also permitting relative rotation of the element to be coated with respect to the conveyor line so as to enable exposure of all the surfaces to the jet of coating powders of the set or the consecutive sets of electrostatic spray guns.

It is also known that attaching the elements to be coated using systems that permit their relative rotation can, however, also enable oscillation of the elements thus attached.

In the case of abrupt acceleration or stopping of the translational motion of the conveyor line, this oscillation can lead to contact between contiguous elements to be coated, causing defects or damage to the surfaces and compromising the success of the coating process as a result.

At the current state of the art, not all of the coating powders sprayed deposit on and adhere electrostatically to the elements to be coated in the coating booths.

The portion of powders not deposited remains suspended in the air of the booth, with the risk of excessive concentration and a consequent risk of explosion.

For the purposes of regulatory compliance, as well as hygiene and safety in the workplace, the air in the booth during operation is continually suctioned and air renewal is ensured with air from the outside environment.

Air is suctioned from the booth conventionally using systems for forced extraction through suction inlets located on the sides and the roof.

The unused coating powders, which have been sprayed, but have not deposited electrostatically on the elements to be coated are then separated from the suctioned air.

These powders are recovered in a cyclone and subsequently re-introduced in the coating cycle.

As regards these coating booths of the prior art, several principal drawbacks are pointed out herein, among which the poor quality of the coating on the elements to be coated as concerns differences in the thickness of the coating powders deposited, the presence of defects affecting the finish, e.g. an "orange peel" finish, and problems with penetration of the powder in the grooves of the profile in complex section elements.

Moreover, the booths of the prior art demonstrate poor efficiency in the deposition of the coating powders, that is, the fraction of sprayed powder that deposits electrostatically on the profile before the powder is removed by the air extraction system of the booth, resulting in a high cost of the coating powders, considering the poor efficiency and high incidence of the cost of the material on the operating costs of the system.

In addition to the above, the booths of the prior art have complex procedures upon a change of colour of the coating powders, in transitioning from one colour to another in a coating system with virtually continuous operation, with a risk of contamination between coating powders of different colours, together with difficulties related to automatic cleaning of the booth and thus with the need for the operator to enter the spraying zone of the booth so as to manually carry out the cleaning procedures when there is a colour change.

Not least in importance, the booths that are currently on the market offer poor levels of safety, ergonomics, hygiene and cleanliness of the workstation of the booth operator, as well as burdensome compliance with regulatory requirements affecting the system - particularly for the extraction of air from the coating booth as suitable for the substantial amount of powder sprayed and not deposited on the elements to be coated, for the purpose of keeping the concentration of coating powders in the air within the safety limits (i.e., the Lower Explosive Limit)-together with high energy consumption, particularly for the energy needed by the air extraction system.

The principal technical task of the present invention is therefore that of eliminating the drawbacks of the prior art cited hereinabove.

Within the scope of this technical task, an aim of the invention is to make available to the market a coating booth for elements to be coated of considerable length that enables marked efficiency of deposition of the coating powders, namely, of the fraction of sprayed powder that deposits electrostatically on the profile before the powder is removed by the air extraction system of the booth.

Another aim of the invention is to realise a coating booth that enables penetration of the powder in the grooves of the profile in complex section elements and a transition from one colour to another in a coating system with virtually continuous operation without a risk of contamination between coating powders of different colours.

A further aim of the invention is to realise a coating booth that can be cleaned automatically under conditions of absolute safety, ergonomics, hygiene and cleanliness.

Not least in importance, an additional aim of the invention is to realise a coating booth that offers limited energy consumption, particularly as regards the energy needed by the air extraction system.

These and other aims are achieved by a coating booth according to claim 1, which is set forth herein below.

Further characteristics of the invention are indicated in the dependent claims.

The coating booth for coating systems with virtually continuous operation constituting the object of the present invention is thus represented by way of approximate, non-limiting example in a preferred, but not exclusive embodiment, according to the invention, in the attached drawings, in which:

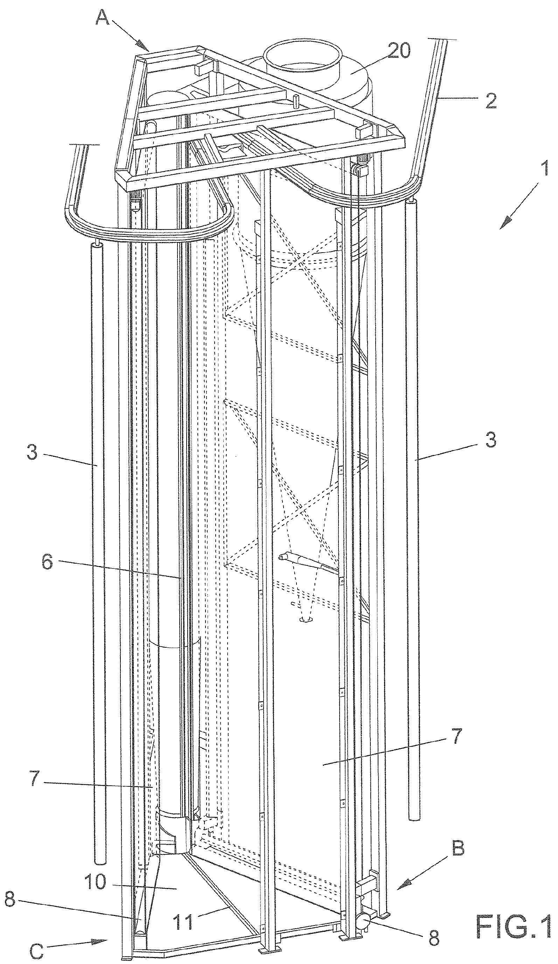

Figure 1 is an assembly view of the booth without the sets of electrostatic spray guns, according to the invention,

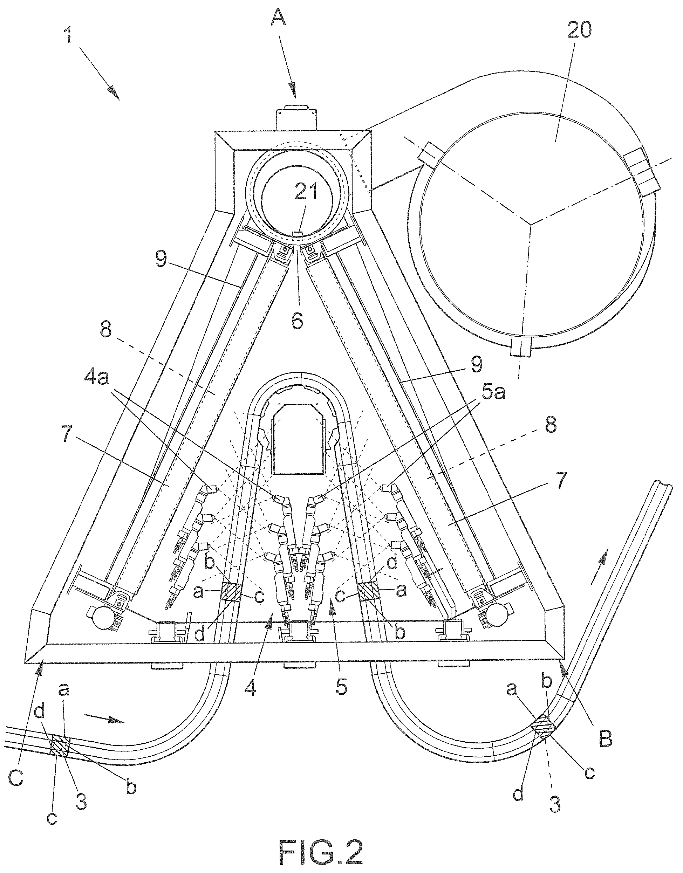

Figure 2 is a schematic plan view of the booth appearing in Figure 1, without the crossbeams of the roof.

With reference to the figures cited, a coating booth is shown and indicated in its entirety by the reference number 1.

More specifically, the booth has an innovative triangular plan schematically identified by a first vertex A, a second vertex B and a third vertex C, within which the conveyor line 2 follows an angled path.

The conveyor line 2 enters the coating booth from side BC having the vertices B and C as the endpoints and completes a path that brings the elements to be coated 3 toward the vertex A and then returns and has said elements to be coated 3 exit from side BC in a substantially symmetrical position with respect to the vertex A at the entrance of the booth.

The elements to be coated 3, including elements of considerable length, are hooked onto the conveyor line 2 for horizontal translation, hanging in a vertical position, with hooking systems that do not enable rotation and limit the oscillation thereof (the hooking systems are not indicated in the plates). Along the approaching path of the line 2 to the vertex A, a first set of electrostatic spray guns 4 for the coating powders is suitably installed on the two sides of the elements to be coated 3, with nozzles 4a directed in the direction of movement of the conveyor line 2, whereas along the departing path of the line 2 away from the vertex A, a second set of electrostatic spray guns 5 for the coating powders is suitably installed on the two sides of the elements to be coated 3, with nozzles 5a directed in the direction opposite that of the conveyor line 2.

The sets of electrostatic spray guns 4 and 5 have reciprocating and controlled movement along a vertical axis so as to suitably spray the coating powders along the entire extension of the height of said elements to be coated 3, said height also possibly being quite substantial.

The set of electrostatic spray guns 4 substantially sprays the lateral a-c and rear surfaces d of the elements to be coated 3, with the coating powders, whereas the set of electrostatic spray guns 5 substantially sprays the lateral a-c and front surfaces b of the elements to be coated 3, with the coating powders.

Advantageously, the spray guns in each set 4 and 5 spray powder from the two opposite sides, but in such a manner that even the clouds of powder ejected from the spray guns opposite each other are always opposite each other, given that the spray guns installed on opposite sides of the overhead conveyor (and therefore facing opposite sides of the pieces to be coated) move in a synchronous manner and are always aligned in height, that is to say, they are at the same height, during the procedure for application of the powder. This aspect is essential, for it determines the advantage of "dipping" the pieces, during the spraying stage, inside a cloud full of powder, fed by the spray guns that spray from the two sides. Moreover, the velocity of the powder particles suspended in air is markedly reduced owing to the fact that the air flows conveying the powder are opposite each other and thus one buffers the other. There are two possibilities: if the flow of air and powder coming from a spray gun encounters the piece, this stream flows against the piece and the powder that does not adhere directly to the piece bounces off and contributes to the formation of the cloud of powder around the piece; if instead the flow of air and powder do not encounter a piece this will be because the two opposite flows meet in the free space between two contiguous profiles and thus one buffers the other, releasing powder, which, owing precisely to the low velocity of the air in which it is suspended, easily adheres by electrostatic attraction to the lateral faces ("inner" lateral faces facing each other) of the two contiguous pieces, and this creates an ideal state of "availability" of the powder, which makes it possible to optimise the application of the powder on the pieces, that is, to increase the amount of powder that adheres to the pieces.

A vertical suction inlet 6 of the air intake system of the booth is suitably mounted at the vertex A of the booth, substantially along the entire height of the booth and has horizontal and vertical sections that are adjustable by means of movable baffles and suitable movement and control systems, which are schematically indicated in the plates as 21.

The flow and the velocity of the suctioned air, and the vertical position within the bounds of the height of the coating booth can thus be advantageously calibrated also based on the size and dimensional features of the elements to be coated.

The concentration of the air flow being suctioned in the booth and of the residual coating powders not directly deposited on the elements to be coated 3, through a sole vertical suction inlet 6 positioned at the vertex A of the triangular section of the booth, flows against the elements to be coated 3 in the approaching path to the vertex A and in the departing path, and it advantageously increases deposition, on the elements to be coated, of the residual portion of coating powder not deposited by direct effect of the sets of electrostatic spray guns 4 and 5 by means of the nozzles 4a and 5a, and remaining suspended in the air in the booth.

The external and internal walls of the booth delimiting the path of the conveyor line 2 are constituted by suitable closed section sheets of plastic material 7, inserted on and kept tight by motorised rotatable rollers 8 that cause the rotation thereof; the portion of excess coating powders deposited on the walls is retrieved by means of the scraper blade 9, which, by suitably scraping against the flexible material of the sheet 7, detaches the coating powders, directing them into a special collection and recycling system.

On the bottom of the booth 10, suitable section elements 11 operate and when suitably moved, they collect from the bottom the excess coating powders that have possibly accumulated there, conveying them toward the collection and recycling system.

It should also be specified that together with the course of the overhead conveyor line 2 inside the booth, the particular geometry of the booth, in the shape of a narrow "V", advantageously makes it possible for the elements to be coated 3, in transit in the booth, to encounter direct spraying by the sets of electrostatic spray guns 4 and 5, and the coating powder, which, given that it has not directly deposited on the elements to be coated 3, travels toward the vertical suction inlet 6 located in the vertex A of the V-shaped plan, and encounters the "array of profiles" in transit prior to being suctioned by the air extraction system of the booth.

With the powders sprayed being equal, the portion of coating powders directly deposited on the elements to be coated 3 during transit through the coating booth thus advantageously increases, thereby augmenting the quality of the coating and the efficiency of the system, and likewise reducing the portion of powders retrieved by the air ventilation and filtering system of the booth.

As mentioned, suctioning of the air in the booth is realised by means of cyclone 20 connected to a suction inlet 6 with a vertical axis, located in the vertex A of the V-shaped plan, and that has a variable geometry and thus makes it possible to change the height at which the suctioning is concentrated based on the dimensional features of the elements to be coated.

In this manner, with the powders sprayed being equal, the concentration of coating powders not deposited and remaining in the air in the booth proves to be limited and thus more easily controlled for the purposes of safety.

Compared to the number conventionally used, there may be fewer electrostatic spray guns in each set 4 and 5, with considerable advantages as regards the amount of air to be suctioned and thus as regards the power of the extraction fan. Although the booth is of the "open" type, coating powder does not leave the coating booth because, with the powders sprayed being equal, the amount of coating powder remaining suspended and not deposited on the elements to be coated is limited, and the system for intake through the suction inlet 6 with a variable geometry can be of more limited power and particularly efficient.

The coating booth stays substantially clean, given that with the powders sprayed being equal, there are limited amounts of excess coating powders that have not deposited; cleaning the system for a change in the colour of the coating powders takes place rapidly and usually does not require the personnel in charge to enter the coating booth.

Moreover, given the high yield of coating powder deposition, the consumption of coating powder is advantageously reduced in the stages of cross-flow start-up at the start of a new lot of elements to be coated, and in the case of the use of particular coating powders that do not permit easy retrieval of the coating powder by means of the system for ventilation and filtering of the air in the booth, as well as in the case of particular coating powders for which retrieval is not advised because the amounts retrieved would have characteristics differing too much from the original coating powder.

In general, considering the high yield of coating powder deposition, the coating quality is advantageously improved owing to the prevalent depositing of original coating powder not coming from the retrieval process, and thus having more controlled physical-chemical characteristics.

Owing to the arrangement of the sets of electrostatic spray guns on both sides of the overhead conveyor line, both of the principal faces of the elements to be coated 3 can be adequately coated, without having to adopt swivel hooks. Furthermore, the spray nozzle 4a and 5a of each individual spray gun can be conveniently inclined in such a manner as to improve the penetration of the coating on the corners and grooves of the elements to be coated 3 and the inclination of the jet with respect to the face of the elements to be coated 3 makes it possible to coat even the corners thereof adequately.

The V-shaped walls of the booth constituted by closed section sheets of plastic material 7, inserted on and kept tight by motorised rotatable rollers 8, are continuously cleaned by the scraper blade 9 and the powder taken off the walls can be retrieved by a suitable conveying and collection system.

Owing to the intelligent and calibrated management of the intake through the suction inlet 6, the floor of the booth 10 will remain almost perfectly clean and in any case, even the coating powder taken from the floor thanks to suitable sector blades 11, can be retrieved by a suitable conveying and collection system.

The roof of the booth represents the most critical zone for the risk of leakage of the coating powder that has not deposited on the elements to be coated 3 and that is suspended in the air in the booth, but owing to the variable suction through the suction inlet 6, in the booth constituting the object of the invention, suction can also be concentrated in the upper part of the suction inlet and thus the coating powder that has not deposited can be suctioned before it is able to leak out from the roof.

The operation of the coating booth is evident from that which has been described and illustrated.

Specifically, the elements to be coated 3 encounter a first set of electrostatic spray guns 4 and nozzles 4a, with spray guns on both sides as they proceed along their approaching path to the suction slot 6; the powders sprayed conveniently flow against the lateral a-c and rear surfaces d of the elements to be coated 3. Once they have passed the innermost curve of the booth, the elements to be coated 3 begin the departing path, while still in the booth, away from the suction slot and pass through another zone with a second set of electrostatic spray guns 5 and nozzles 5a, with spray guns spraying from both sides; the lateral a-c and front surfaces b of the elements to be coated 3 will conveniently collect the coating powder, directly, owing to the suitable inclination of the nozzle 5a, and by the so-called cascade effect, with the result that all four surfaces a-b-c-d of the elements to be coated 3 will be adequately coated with coating powder even when the geometry thereof is difficult to coat.

Modifications and variants are of course possible as regards the geometry of the booth, based on the geometric features of the elements to be coated, the physical-chemical characteristics of the coating powders and the characteristics of the complete coating cycle.

It has been found in practice that a coating booth according to the invention, proves to be particularly advantageous for offering a particular geometry, in the shape of a narrow "V", which, together with the course followed by the overhead conveyor line inside the booth, advantageously makes it possible for the elements to be coated, in transit in the booth, to encounter direct spraying and the coating powder, which, given that it has not directly deposited on the elements to be coated, travels toward the vertical suction inlet.

The coating booth thus conceived is susceptible to numerous modifications and variants, all of which falling within the scope of the inventive concept. Moreover, all the details may be replaced with technically equivalent elements.

The materials used, as well as the dimensions and proportions, may in practice be of any type, according to requirements and the state of the art.

## Claims

1. A coating booth for elements to be coated (3) of considerable length, having a triangular plan schematically identified by a first, a second and a third vertex (A, B and C), within which a conveyor line (2) enters the side (BC) having said second and third vertices (B and C) as the endpoints, completing a path that brings said elements to be coated (3) toward said first vertex (A), to then return and have said elements to be coated (3) exit from said side (BC) in a substantially symmetrical position with respect to said first vertex (A), **characterized in that** in the proximity of said first vertex (A) said conveyor line (2) has, **on the** two sides of said elements to be coated (3), at least a first set of electrostatic spray guns (4) for the coating powders with nozzles (4a) directed in the direction of movement of said conveyor line (2), said first set of electrostatic spray guns (4) substantially spraying the lateral (a-c) and rear surfaces (d) of said elements to be coated (3), with said coating powders (5) and at least a second set of electrostatic spray guns (5) for said coating powders with nozzles (5a) directed in the direction opposite said movement of said conveyor line (2), said second set of electrostatic spray guns (4) substantially spraying the lateral (a-c) and front surfaces (b) of said elements to be coated (3), with said coating powders.

2. The coating booth according to claim 1, **characterised in that** it has systems for hooking said elements to be coated (3) to said conveyor line (2), said hooking systems being configured for horizontal translation and suspended conveyance of said elements to be coated (3), in a vertical position, said hooking systems not enabling rotation and limiting oscillation of said elements to be coated (3).

3. The coating booth according to claim 1, **characterised in that** said first and second set of electrostatic spray guns (4 and 5) have reciprocating and controlled movement along a vertical axis so as to suitably spray the coating powders along the entire extension of the height of said elements to be coated (3).

4. The coating booth according to any one of the preceding claims, **characterised in that** a vertical suction inlet (6) of the air intake system of said booth is suitably mounted at said first vertex (A), said vertical inlet (6) extending substantially along the entire height of said booth and having horizontal and vertical sections that are adjustable by means of movable baffles and suitable movement and control systems.

5. The coating booth according to claim 6, **characterised in that** said air intake system is formed and arranged in such a manner that the concentration of the flow of said air intake system and of said residual coating powders not directly deposited on said elements to be coated (3), flows against said elements to be coated (3), in the approaching path to said first vertex (A) and in the departing path, and advantageously increases deposition, on said elements to be coated (3), of the residual portion of coating powder not deposited and remaining suspended in the air in the booth.

6. The coating booth according to any one of the preceding claims, **characterised in that** the external and internal walls of said booth delimiting the path of the conveyor line (2) are constituted by suitable closed section sheets of plastic material (7), inserted on and kept tight by motorised rotatable rollers (8) that cause the rotation thereof, the portion of excess coating powders deposited on the walls being retrieved by means of the scraper blade (9), which, by suitably scraping against the flexible material of the sheet (7), detaches the coating powders, directing them into a special collection and recycling system.

7. The coating booth according to claim 6, **characterised in that** on the bottom of said booth (10) suitable section elements (11) operate; when suitably moved, the section elements (11) collect from the bottom the excess coating powders possibly accumulated there, conveying them toward said collection and recycling system.

8. The coating booth according to any one of claims 1 to 7, **characterised in that** in each one of said first and second set of spray guns (4 and 5), the spray guns are on opposite sides of the overhead conveyor, move in a synchronous manner and are always aligned in height.

## Patentansprüche

1. Beschichtungskabine für zu beschichtende Elemente (3) beträchtlicher Länge, aufweisend eine dreieckige Gliederung, die schematisch durch einen ersten, einen zweiten und einen dritten Scheitel (A, B und C) identifiziert ist, in der eine Förderanlage (2) in die Seite (BC) eintritt, aufweisend den zweiten und dritten Scheitel (B und C) als Endpunkte, vervollständigend einen Weg, der die zu beschichtenden Elemente (3) zum ersten Scheitel (A) führt, dann zurückführt und dafür sorgt, dass die zu beschichtenden Elemente (3) aus der Seite (BC) in einer im Wesentlichen zum ersten Scheitel (A) symmetrischen Position austreten, **dadurch gekennzeichnet, dass** die Förderanlage (2) in der Nähe des ersten Scheitels (A) an den zwei Seiten der zu beschichtenden Elemente (3) mindestens eine erste Reihe elektrostatischer Spritzpistolen (4) für die Beschichtungspulver aufweist, mit Düsen (4a), die in die Bewegungsrichtung der Förderanlage (2) zeigen, wobei die erste Reihe elektrostatischer Spritzpistolen (4) im Wesentlichen die seitlichen Oberflächen (a-c) und die rückseitige Oberfläche (d) der zu beschichtenden Elemente (3) mit den Beschichtungspulvern (5) besprüht, sowie mindestens eine zweite Reihe elektrostatischer Spritzpistolen (5) für die Beschichtungspulver, mit Düsen (5a), die in die Richtung zeigen, die der Bewegung der Förderanlage (2) entgegengesetzt ist, wobei die zweite Reihe elektrostatischer Spritzpistolen (4) im Wesentlichen die seitlichen Oberflächen (a-c) und die frontseitige Oberfläche (b) der zu beschichtenden Elemente (3) mit den Beschichtungspulvern besprüht.

2. Beschichtungskabine nach Anspruch 1, **dadurch gekennzeichnet, dass** sie Systeme zur Hakenbefestigung der zu beschichtenden Elemente (3) an der Förderanlage (2) aufweist, wobei die Hakenbefestigungssysteme für den horizontalen Transport und die schwebende Förderung der zu beschichtenden Elemente (3) in einer vertikalen Position ausgelegt sind, wobei die Hakenbefestigungssysteme die Drehung nicht ermöglichen und das Schwanken der zu beschichtenden Elemente (3) begrenzen.

3. Beschichtungskabine nach Anspruch 1, **dadurch gekennzeichnet, dass** die erste und die zweite Reihe elektrostatischer Spritzpistolen (4 und 5) eine pendelnde und gesteuerte Bewegung entlang einer vertikalen Achse aufweisen, sodass die Beschichtungspulver auf geeignete Weise entlang der gesamten Ausdehnung der Höhe der zu beschichtenden Elemente (3) gesprüht werden.

4. Beschichtungskabine nach einem der vorhergehenden Ansprüche, **dadurch gekennzeichnet, dass** ein vertikaler Saugeinlass (6) des Zuluftsystems der Kabine auf geeignete Weise am ersten Scheitel (A) montiert ist, wobei sich der vertikale Einlass (6) im Wesentlichen entlang der gesamten Kabinenhöhe erstreckt, und aufweisend horizontale und vertikale Sektionen, die mittels bewegbarer Leitbleche und geeigneter Bewegungs- und Steuerungssysteme verstellt werden können.

5. Beschichtungskabine nach Anspruch 6, **dadurch gekennzeichnet, dass** das Zuluftsystem so ausgebildet und angeordnet ist, dass die Konzentration des Stroms des Zuluftsystems und der restlichen Beschichtungspulver, die sich nicht direkt auf den zu beschichtenden Elementen (3) abgelagert haben, gegen die zu beschichtenden Elemente (3) bei der Annäherung an den ersten Scheitel (A) und bei der Entfernung strömt und vorteilhafterweise die Ablagerung auf den zu beschichtenden Elementen (3) des restlichen Anteils des nicht abgelagerten und in der Luft der Kabine schwebenden Beschichtungspulvers erhöht.

6. Beschichtungskabine nach einem der vorhergehenden Ansprüche, **dadurch gekennzeichnet, dass** die Außen- und Innenwände der Kabine, die den Weg der Förderanlage (2) begrenzen, aus geeigneten Platten mit geschlossenem Querschnitt aus Kunststoffmaterial (7) bestehen, die auf motorisierten Drehrollen (8) eingefügt sind und durch diese festgespannt werden, die deren Drehung verursachen, wobei der Anteil der überschüssigen, an den Wänden abgelagerten Beschichtungspulver mittels des Schabers (9) wiedergewonnen wird, der durch geeignetes Abschaben des flexiblen Materials der Platte (7) die Beschichtungspulver ablöst und diese in ein spezielles Sammel- und Rückgewinnungssystem einleitet.

7. Beschichtungskabine nach Anspruch 6, **dadurch gekennzeichnet, dass** geeignete Sektionselemente (11) am Boden der Kabine (10) arbeiten, wobei die Sektionselemente (11), wenn sie auf geeignete Weise bewegt werden, die überschüssigen Beschichtungspulver sammeln, die sich möglicherweise am Boden angehäuft haben, und diese in das Sammel- und Rückgewinnungssystem einleiten.

8. Beschichtungskabine nach einem der Ansprüche 1 bis 7, **dadurch gekennzeichnet, dass** die Spritzpistolen sowohl der ersten als auch der zweiten Reihe an Spritzpistolen (4 und 5) an entgegengesetzten Seiten der Überkopfförderung angeordnet sind, sich synchron bewegen und stets in der Höhe ausgerichtet sind.

## Revendications

1. Cabine de revêtement pour éléments à revêtir (3) de grande longueur, ayant un plan triangulaire schématiquement identifié par un premier, un second et un troisième sommet (A, B et C), à l'intérieur de laquelle une ligne de transport (2) entre par le côté (BC), ayant lesdits second et troisième sommets (B et C) comme points limites, terminant un parcours qui amène lesdits éléments à revêtir (3) vers ledit premier sommet (A), pour ensuite revenir et avoir lesdits éléments à revêtir (3) sortir dudit côté (BC) dans une position substantiellement symétrique par rapport au dit premier sommet (A), **caractérisée en ce que** à proximité dudit premier sommet (A) ladite ligne de transport (2) possède, sur les deux côtés desdits éléments à revêtir (3), au moins un premier ensemble de pistolets de pulvérisation électrostatiques (4) pour les poudre de revêtement avec des buses (4a) orientées dans la direction de mouvement de ladite ligne de transport (2), ledit premier ensemble de pistolets pulvérisateurs électrostatiques (4) pulvérisant substantiellement les surfaces latérales (a-c) et postérieure (d) desdits éléments à revêtir (3) avec lesdites poudres de revêtement (5) et au moins un second ensemble de pistolets pulvérisateurs électrostatiques (5) pour lesdites poudres de revêtement avec des buses (5a) orientées dans la direction opposée au dit mouvement de ladite ligne de transport (2), ledit second ensemble de pistolets pulvérisateurs électrostatiques (4) pulvérisant substantiellement les surfaces latérales (a-c) et antérieure (b) desdits éléments à revêtir (3), avec lesdites poudres de revêtement.

2. Cabine de revêtement selon la revendication 1, **caractérisée en ce qu'**elle possède des systèmes destinés à accrocher lesdits éléments à revêtir (3) à ladite ligne de transport (2), lesdits systèmes d'accrochage étant configurés pour effectuer une translation horizontale et un transport suspendu desdits éléments à revêtir (3) dans une position verticale, lesdits systèmes d'accrochage empêchant la rotation et limitant l'oscillation desdits éléments à revêtir (3).

3. Cabine de revêtement selon la revendication 1, **caractérisée en ce que** lesdits premier et second ensembles de pistolets pulvérisateurs électrostatiques (4 et 5) possèdent un mouvement alternatif et commandé le long d'un axe vertical de sorte à convenablement pulvériser les poudres de revêtement le long de toute l'extension de la hauteur desdits éléments à revêtir (3).

4. Cabine de revêtement selon l'une quelconque des revendications précédentes, **caractérisée en ce qu'**un orifice d'aspiration vertical (6) du système d'admission d'air de ladite cabine est monté de façon appropriée au niveau dudit premier sommet (A), ledit orifice vertical (6) se prolongeant substantiellement le long de toute la hauteur de ladite cabine et ayant des sections horizontale et verticales étant réglables au moyen de déflecteurs mobiles et de systèmes de déplacement et de commande appropriés.

5. Cabine de revêtement selon la revendication 6, **caractérisée en ce que** ledit système d'admission d'air est réalisé et disposé de manière à ce que la concentration du débit dudit système d'admission d'air et desdites poudres de revêtement résiduelles, n'étant pas directement déposées sur lesdits éléments à revêtir (3), s'écoule contre lesdits éléments à revêtir (3), lors du parcours d'approche vers ledit premier sommet (A) et lors du parcours de départ, et augmente avantageusement la déposition, sur lesdits éléments à revêtir (3), de la partie résiduelle de poudre de revêtement non déposée et restant suspendue dans l'air dans la cabine.

6. Cabine de revêtement selon l'une quelconque des revendications précédentes, **caractérisée en ce que** les parois extérieures et intérieures de ladite cabine délimitant le parcours de la ligne de transport (2) sont constituées de feuilles à section fermées appropriées en matière plastique (7), insérées et maintenues fermement par des rouleaux rotatifs motorisés (8) qui provoquent leur rotation, la portion de poudres de revêtement excédentaire déposée sur les parois étant récupérée au moyen de la lame racleuse (9), qui, par raclage approprié contre le matériau flexible de la feuille (7), détache les poudres de revêtement, en les dirigeant vers un système de récupération et de recyclage spécial.

7. Cabine de revêtement selon la revendication 6, **caractérisée en ce que** des éléments de section (11) fonctionnent sur le fond de ladite cabine (10); lorsque les éléments de section (11) sont déplacés de façon appropriée, ceux-ci récupèrent du fond les poudres de revêtement excédentaire qui s'y sont probablement accumulées, en les acheminant vers ledit système de récupération et de recyclage.

8. Cabine de revêtement selon l'une quelconque des revendications de 1 à 7, **caractérisée en ce que** dans chacun desdits premier et second ensembles de pistolets pulvérisateurs (4 et 5), les pistolets pulvérisateurs se situent sur des côtés opposés du convoyeur aérien, se déplacent de façon synchrone et sont toujours alignés en hauteur.
